# EUROPÄISCHE PATENTANMELDUNG

(11) **EP 4 410 515 A1**
(43) Veröffentlichungstag der Anmeldung: **07.08.2024**
(21) Anmeldenummer: 24154849.4
(22) Anmeldetag: 30.01.2024
(51) Int. Cl.: B29C 45/76, B29C 45/78

(54) **SPRITZGIESSMASCHINE MIT SENSORGESTÜTZTER MASCHINENPARAMETERSTEURUNG UND VERFAHREN ZUR SENSORGESTÜTZTEN MASCHINENPARAMETERSTEURUNG VON SPRITZGUSSPROZESSEN**

(30) Priorität: 03.02.2023 DE 102023102706
(71) Anmelder: NETZSCH Process Intelligence GmbH, 95100 Selb (DE)
(72) Erfinder: Dr. CHALOUPKA, Alexander, 86980 Ingenried (DE); Dr. ECKE, Nicholas, 85598 Baldham (DE); Prof Dr. ENGLICH, Sascha, 09112 Chemnitz (DE); KETELS, Josef, 81369 München (DE); Dr. PUENTES, John, 80637 München (DE); SCHWARZ, Ingo, 82205 Gilching (DE)
(74) Vertreter: Isarpatent

(57) **Zusammenfassung**

Eine Spritzgießmaschine (100) umfasst eine Plastifiziereinheit (10) mit einem Plastifizierzylinder (11) und einer in dem Plastifizierzylinder (11) beweglichen, durch einen Materialförderantrieb (13) angetriebenen Materialfördervorrichtung (12), eine Materialförderantriebssteuerung (21), welche mit dem Materialförderantrieb (12) gekoppelt und dazu ausgelegt ist, Betriebsparameter des Materialförderantriebs (12) zu steuern, eine Schließeinheit (15) mit einem Spritzgießwerkzeug (16), welches mit einer Ausgangsdüse (14) des Plastifizierzylinders (11) verbunden ist, sowie eine Schließeinheitssteuerung (22), welche mit einem Schließeinheitsantrieb (9) der Schließeinheit (15) gekoppelt und dazu ausgelegt ist, Betriebsparameter der Schließeinheitsantriebs (9) zu steuern. Die Spritzgießmaschine (100) umfasst weiterhin einen oder mehrere dielektrische oder akustische Sensoren (18), welche in der Kavität (17) des Spritzgießwerkzeugs (16) oder in der Nähe der Kavität (17) des Spritzgießwerkzeugs (16) angeordnet und dazu ausgelegt sind, die dielektrische Polarisierbarkeit, die Beweglichkeit freier Ladungsträger und/oder akustische Materialantworten einer Formmasse (S) in der Kavität (17) des Spritzgießwerkzeugs (16) zu bestimmen. Eine Sensorsteuerung (23) ist mit dem/n dielektrischen oder akustischen Sensor/en (18) gekoppelt und dazu ausgelegt, einen zeitabhängigen Kristallisationsgrad und eine zeitabhängige mittlere Temperatur der Formmasse (S) in der Kavität (17) des Spritzgießwerkzeugs (16) aus der durch den/die dielektrischen Sensor/en (18) bestimmten dielektrischen Polarisierbarkeit, Beweglichkeit freier Ladungsträger und/oder akustischen Materialantworten zu ermitteln und in Abhängigkeit des ermittelten Kristallisationsgrades und der ermittelten mittleren Temperatur die Materialförderantriebssteuerung (21) und/oder die Schließeinheitssteuerung (22) zur Anpassung der Betriebsparameter des Materialförderantriebs (12) und/oder des Schließeinheitsantriebs (9) anzusteuern.

## Beschreibung

### GEBIET DER ERFINDUNG

Diese Erfindung bezieht sich auf eine Spritzgießmaschine, deren Maschinenparameter durch sensorgestützte Echtzeit-Inline-Überwachung während des Spritzgussprozesses dynamisch angepasst werden können, sowie ein Verfahren zur dynamischen Steuerung von Maschinenparametern durch sensorgestützte Echtzeit-Inline-Überwachung während des Spritzgussprozesses, insbesondere durch eine in situ Sensorüberwachung von Prozessvariablen eines Prozesssimulationsmodells und gleichzeitige algorithmische Anpassung der Prozesssimulationsmodells auf der Basis der Sensorüberwachung.

Obwohl auch auf jede Art von Spritzgießmaschinen anwendbar, wie beispielsweise Thermoplast-Spritzgießmaschinen, Duroplast-Spritzgießmaschinen oder Elastomer-Spritzgießmaschinen werden diese Erfindung und die entsprechenden zugrundeliegenden Problemstellungen ausführlicher in Verbindung mit Spritzgussprozessen teilkristalliner Thermoplaste erklärt. Ebenso können Implementierungsformen dieser Erfindung nicht nur im Zusammenhang mit Spritzgießmaschinen, sondern auch Harzinjektionsmaschinen, Harzinfusionsmaschinen, in Formpressverfahren, in Extrusions- bzw. Pultrusionsverfahren, in Blasformverfahren sowie in Tapelegeverfahren angewandt werden

### ALLGEMEINER STAND DER TECHNIK

Zur Gewährleistung einer Bauteilherstellung mit geringer Ausschussquote in Kunststoffspritzgussprozessen kommt es wesentlich auf die Sicherstellung der Materialstabilität des zu verarbeitenden Materials sowie eine damit einhergehende angepasste Prozessführung an. Da Schwankungen in der Materialzusammensetzung und im Materialverhalten während des Spritzgussprozesses, verursacht beispielsweise durch Variation des Mischungsverhältnisses, des Gehalts an Füllstoffen oder Additiven, der Alterung, der Verweildauer des Spritzgussmaterials in der Maschine vor und während des Spritzgussprozesses, und/oder mechanischer Einflüsse während der Verarbeitung sowie durch Variation der Rohkomponenten, durch Variationen in der Transport- und/oder Lagerstabilität sowie durch andere nicht bekannte Prozesseinflüsse nicht ausgeschlossen werden können, ist es wünschenswert die Prozessführung flexibel an diese äußeren Gegebenheiten anpassen zu können.

Der Trend in der Kunststoffindustrie geht zu einer Zunahme des Anteils von bei der Verarbeitung thermoplastischer Werkstoffe zugesetzten Rezyklaten. Da bei derartigen Ausgangsmaterialien die Historie des eingesetzten Rezyklatmaterials häufig nicht bekannt oder nicht mit hinreichender Genauigkeit ermittelbar ist, ist von einer Zunahme der Schwankungen in der Materialzusammensetzung und im Materialverhalten auszugehen. Diese Schwankungen treten zu den ohnehin schon zu erwartenden Material-, Umwelt und Prozessschwankungen hinzu, so dass starke Änderungen des Schmelzezustandes im Plastifizierzylinder einer Spritzgießmaschine und damit einhergehende starke Änderungen im Füll- sowie Abkühl-/Erstarrungs-/Härtungsverhalten im Werkzeug, beispielsweise bei der Einspritzung, Vernetzung, Kristallisation und/oder Verfestigung amorpher Thermoplaste zu erwarten sind. Im Falle von Thermoplasten mit Rezyklatanteilen spielen auch Art und Mischverhältnisse der Thermoplasten, Verarbeitungshistorie der Rezyklate (Aussetzung gegenüber Umwelteinflüssen wie Chemikalien oder Temperaturschwankungen), Rezyklatgeneration der verschiedenen Rezyklatanteile sowie mechanischer Einflüsse während der vorherigen Verarbeitung der Rezyklate bei der Steuerung von Spritzgussprozessen eine Rolle.

Die industrielle Herstellung von Kunststoffbauteilen ist jedoch auf eine reproduzierbare Steuerung des Erstarrungs- bzw. Kristallisationsverhaltens der verwendeten Werkstoffe angewiesen, da die Eigenschaften des Endprodukts stark von den Bedingungen des Erstarrungsprozesses abhängen. Daher ist es wünschenswert, in der Lage zu sein, in Echtzeit auf Schwankungen im Erstarrungs- bzw. Kristallisationsverhalten in jedem individuellen solcher Prozesse dynamisch reagieren zu können.

### KURZDARSTELLUNG DER ERFINDUNG

Wenigstens einige dieser Ziele werden durch den Gegenstand der jeweiligen unabhängigen Ansprüche erreicht. Vorteilhafte Ausführungsformen werden in den Unteransprüchen beschrieben, die mit den unabhängigen Ansprüchen zusammenhängen.

Nach einem ersten Aspekt der Erfindung umfasst eine Spritzgießmaschine eine Plastifiziereinheit mit einem Plastifizierzylinder und einer in dem Plastifizierzylinder beweglichen, durch einen Materialförderantrieb angetriebenen Materialfördervorrichtung, eine Materialförderantriebssteuerung, welche mit dem Materialförderantrieb gekoppelt und dazu ausgelegt ist, Betriebsparameter des Materialförderantriebs zu steuern, eine Schließeinheit mit einem Spritzgießwerkzeug, welches mit einer Ausgangsdüse des Plastifizierzylinders verbunden ist, sowie eine Schließeinheitssteuerung, welche mit einem Schließeinheitsantrieb der Schließeinheit gekoppelt und dazu ausgelegt ist, Betriebsparameter des Schließeinheitsantriebs zu steuern. Ein oder mehrere dielektrische oder akustische Sensoren sind in der Kavität des Spritzgießwerkzeugs oder in der Nähe der Kavität des Spritzgießwerkzeugs angeordnet und dazu ausgelegt, die dielektrische Polarisierbarkeit, die Beweglichkeit freier Ladungsträger und/oder akustische Materialantworten einer Formmasse in der Kavität des Spritzgießwerkzeugs zu bestimmen. Die Spritzgießmaschine umfasst weiterhin eine Sensorsteuerung, welche mit dem/n dielektrischen oder akustischen Sensor/en gekoppelt und dazu ausgelegt ist, einen zeitabhängigen Kristallisationsgrad und eine zeitabhängige mittlere Temperatur der Formmasse in der Kavität des Spritzgießwerkzeugs aus der durch den/die dielektrischen oder akustischen Sensor/en bestimmten dielektrischen Polarisierbarkeit, Beweglichkeit freier Ladungsträger und/oder akustischen Materialantworten zu ermitteln und in Abhängigkeit des ermittelten Kristallisationsgrades und der ermittelten mittleren Temperatur die Materialförderantriebssteuerung und/oder die Schließeinheitssteuerung zur Anpassung der Betriebsparameter des Materialförderantriebs und/oder des Schließeinheitsantriebs anzusteuern.

Die Spritzgießmaschine kann dabei eine Schneckenspritzgießmaschine sein, welche als Materialfördervorrichtung eine in dem Plastifizierzylinder rotierende, durch einen Schneckenantrieb angetriebene Schneckenwelle aufweist, und deren Materialförderantrieb ein Schneckenantrieb ist. Eine Schneckenantriebssteuerung ist mit dem Schneckenantrieb gekoppelt und dazu ausgelegt ist, Betriebsparameter des Schneckenantriebs zu steuern.

Alternativ dazu kann die Spritzgießmaschine eine Kolbenspritzgießmaschine, welche als Materialfördervorrichtung einen in dem Plastifizierzylinder gleitend verschiebbaren, durch einen Kolbenantrieb angetriebenen Kolben aufweist, und deren Materialförderantrieb ein Kolbenantrieb ist. Eine Kolbenantriebssteuerung ist mit dem Kolbenantrieb gekoppelt und dazu ausgelegt ist, Betriebsparameter des Kolbenantriebs zu steuern.

Nach einem zweiten Aspekt der Erfindung umfasst ein Verfahren zur dynamischen Steuerung von Maschinenparametern durch sensorgestützte Echtzeit-Inline-Überwachung in einer Spritzgießmaschine mit einer Materialfördervorrichtung und einer Schließeinheit die folgenden Schritte: Bestimmen einer dielektrischen Polarisierbarkeit, einer Beweglichkeit freier Ladungsträger und/oder akustischer Materialantworten einer Formmasse in einer Kavität eines Werkzeugs einer Spritzgießmaschine durch einen oder mehrere dielektrische oder akustische Sensoren welche in der Kavität des Spritzgießwerkzeugs oder in der Nähe der Kavität des Spritzgießwerkzeugs angeordnet sind; Ermitteln eines zeitabhängigen Kristallisationsgrades und einer zeitabhängigen mittleren Temperatur der Formmasse in der Kavität des Spritzgießwerkzeugs aus der durch den/die dielektrischen oder akustischen Sensor/en bestimmten dielektrischen Polarisierbarkeit, Beweglichkeit freier Ladungsträger und/oder akustischen Materialantworten; und Anpassen von Betriebsparametern eines Materialförderantriebs der Materialfördervorrichtung und/oder eines Schließeinheitsantriebs der Schließeinheit in Abhängigkeit des ermittelten Kristallisationsgrades und der ermittelten mittleren Temperatur.

Gemäß einiger Ausführungsformen des ersten oder zweiten Aspekts der Erfindung ist der Materialförderantrieb ein Schneckenantrieb und die Materialfördervorrichtung eine Schneckenwelle, und die Betriebsparameter des Schneckenantriebs umfassen das Schneckenwellenmoment, die Schneckenwellendrehzahl, die Einspritzgeschwindigkeit, das Einspritzvolumen, den Umschaltpunkt und/oder den Einspritznachdruck.

Gemäß einiger weiterer Ausführungsformen des ersten oder zweiten Aspekts der Erfindung umfassen die Betriebsparameter der Schließeinheit die Werkzeugschließkraft, den Nachlaufdruck und/oder die Werkzeugheizleistung.

Gemäß einiger weiterer Ausführungsformen des ersten oder zweiten Aspekts der Erfindung weist die Formmasse in der Kavität des Werkzeugs einen Anteil von mindestens 1 vol%, insbesondere mindestens 10 vol%, insbesondere mindestens 15 vol%, insbesondere mindestens 20 vol%, und insbesondere mindestens 25 vol% Rezyklatmaterial, insbesondere Pre-Consumer-Rezyklatmaterial oder Post-Consumer-Rezyklatmaterial, auf.

Gemäß einiger weiterer Ausführungsformen des ersten Aspekts der Erfindung kann die Spritzgießmaschine ferner einen oder mehrere Temperatursensoren aufweisen, welche in der Kavität des Spritzgießwerkzeugs, in der Nähe der Kavität des Spritzgießwerkzeugs und/oder an dem Plastifizierzylinder angeordnet sind.

Gemäß einiger weiterer Ausführungsformen des ersten Aspekts der Erfindung kann die Spritzgießmaschine ferner einen oder mehrere Drucksensoren aufweisen, welche in der Kavität des Spritzgießwerkzeugs, in der Nähe der Kavität des Spritzgießwerkzeugs und/oder an dem Plastifizierzylinder angeordnet sind. In manchen Implementierungsformen können die Drucksensoren Differentialthermoanalysesensoren umfassen. In manchen weiteren Implementierungsformen kann die Spritzgießmaschine separate Differentialthermoanalysesensoren umfassen, die in der Kavität des Spritzgießwerkzeugs, in der Nähe der Kavität des Spritzgießwerkzeugs und/oder an dem Plastifizierzylinder angeordnet sind.

Gemäß einiger weiterer Ausführungsformen des zweiten Aspekts der Erfindung kann das Verfahren weiterhin einen Schritt des Ermittelns einer Temperatur der Formmasse in einem Plastifizierzylinder der Spritzgießmaschine und/oder in der Kavität des Spritzgießwerkzeugs durch einen oder mehrere Temperatursensoren, welche in der Kavität des Spritzgießwerkzeugs, in der Nähe der Kavität des Spritzgießwerkzeugs und/oder an dem Plastifizierzylinder angeordnet sind, aufweisen.

Gemäß einiger weiterer Ausführungsformen des zweiten Aspekts der Erfindung kann das Verfahren weiterhin einen Schritt des Ermittelns eines Drucks der Formmasse in einem Plastifizierzylinder der Spritzgießmaschine und/oder in der Kavität des Spritzgießwerkzeugs durch einen oder mehrere Drucksensoren, welche in der Kavität des Spritzgießwerkzeugs, in der Nähe der Kavität des Spritzgießwerkzeugs und/oder an dem Plastifizierzylinder angeordnet sind, aufweisen. In manchen Implementierungsformen können die Drucksensoren Differentialthermoanalysesensoren umfassen. In manchen weiteren Implementierungsformen kann die Spritzgießmaschine separate Differentialthermoanalysesensoren umfassen, die in der Kavität des Spritzgießwerkzeugs, in der Nähe der Kavität des Spritzgießwerkzeugs und/oder an dem Plastifizierzylinder angeordnet sind.

Gemäß einiger weiterer Ausführungsformen des ersten oder zweiten Aspekts der Erfindung können zusätzliche akustische Sensoren in der Kavität des Spritzgießwerkzeugs oder im Plastifizierzylinder vorgesehen sein, um das akustische Materialverhalten der Formmasse bzw. des Kunststoffrohmaterials zu bestimmen, welches auf den Kristallisationsgrad, die mittlere Dichte, die mittlere Temperatur sowie den Forminnendruck schließen lässt.

### KURZBESCHREIBUNG DER ZEICHNUNGEN

Die Erfindung wird ausführlicher mit Verweis auf beispielhafte Ausführungsformen beschrieben, die in den beiliegenden Zeichnungen dargestellt sind.

Die beiliegenden Zeichnungen sind enthalten, um ein weiteres Verständnis dieser Erfindung zu ermöglichen und sind in diese Beschreibung einbezogen und stellen einen Teil davon dar. Die Zeichnungen illustrieren die Ausführungsformen dieser Erfindung und dienen gemeinsam mit der Beschreibung der Erklärung der Grundsätze der Erfindung. Andere Ausführungsformen dieser Erfindung und viele der vorgesehenen Vorteile dieser Erfindung sind leicht zu verstehen, wenn sie durch Verweis auf die folgende ausführliche Beschreibung besser verständlich werden. Die Elemente der Zeichnungen sind nicht notwendigerweise im gleichen Maßstab zueinander gezeichnet. Gleiche Bezugszeichen bezeichnen entsprechend ähnliche Teile.
- Fig. 1: illustriert schematisch eine Spritzgießmaschine, deren Maschinenparameter durch sensorgestützte Echtzeit-Inline-Überwachung während des Spritzgussprozesses dynamisch angepasst werden können, nach einer beispielhaften Ausführungsform der Erfindung;
- Fig. 2: skizziert schematisch ein beispielhaftes pVT-Diagramm teilkristalliner Thermoplasten, das als Grundlage für eine Regelung eines Spritzgussprozesses eingesetzten werden kann, sowie einen zeitlichen Verlauf des Betriebsdrucks in einer Spritzgießmaschine nach einer beispielhaften Ausführungsform der Erfindung; und
- Fig. 3: illustriert schematisch ein Ablaufdiagramm von Stufen eines Verfahrens zur dynamischen Steuerung von Maschinenparametern durch sensorgestützte Echtzeit-Inline-Überwachung während des Spritzgussprozesses nach einer beispielhaften Ausführungsform der Erfindung.

In den Figuren bezeichnen gleiche Bezugszeichen gleiche oder funktional ähnliche Bauteile, wenn nicht anders angegeben. Alle Richtungsbezeichnungen, wie "oben", "unten", "links", "rechts", "über", "unter", "horizontal", "vertikal", "hinten", "vorne" und ähnliche Begriffe werden nur zur Erklärungszwecken verwendet und sollen die Ausführungsformen nicht auf die spezifischen Anordnungen beschränken, die in den Zeichnungen dargestellt sind.

### AUSFÜHRLICHE BESCHREIBUNG DER ERFINDUNG

Wenn auch spezifische Ausführungsformen hierin illustriert und beschrieben wurden, ist durch gewöhnliche Fachleute zu versehen, dass die spezifischen Ausführungsformen die gezeigt und beschrieben sind, durch eine Vielzahl alternativer und/oder äquivalenter Umsetzungen ersetzt werden können, ohne vom Schutzbereich der vorliegenden Erfindung abzuweichen. Allgemein soll diese Anmeldung alle Anpassungen oder Variationen der spezifischen Ausführungsformen abdecken, die hierin beschrieben werden.

Rezyklate im Sinne der vorliegenden Offenbarung umfassen alle Sekundärrohstoffe, die beim Recycling von Kunststoffabfällen gewonnen werden, beispielsweise aus PE (Polyethylen), PP (Polypropylen) oder PET (Polyethylenenterephthalat). Rezyklate können als Mahlgut, Regranulat und/oder Regenerat einem Primärmaterial in variablen Anteilen, beispielsweise zu mindesten 1 vol%, mindestens 10 vol%, mindestens 15 vol%, mindestens 20 vol%, oder mindestens 25 vol% zugesetzt und zur Herstellung neuer Endprodukte genutzt werden.

Post-Consumer-Rezyklate können durch eine pyrolytische Zersetzung in die Ausgangsprodukte der Kunststoffproduktion und durch das Einwirken von Wärme, Katalysatoren sowie Lösungsmitteln können dabei die Polymerketten der Kunststoffabfälle verkürzt und bis hin zu Monomeren aufgespalten werden. Anschließend kann aus den gewonnenen Grundbestandteilen neues Kunststoffrohmaterial als Rezyklat raffiniert werden. Alternativ dazu können Post-Consumer-Rezyklate auch aus den Abfällen von Endverbrauchern gewonnen werden, indem die Abfälle gesammelt, nach Kunststofftype (PP, PE, PS) sortiert und anschließend zerkleinert, gewaschen und zu neuem Kunststoffgranulat aufgeschmolzen werden.

Auf mechanische Weise gewonnene Rezyklate haben eine für einen neuerlichen Spritzgussprozess nicht bekannte Historie, so dass aufgrund hoher Anforderungen an eine Bauteilqualität in Spritzgussprozessen besonderes Augenmerk auf die zu erwartenden Materialqualitätsschwankungen gelegt werden muss.

Pre-Consumer-Rezyklate können aus industriellen Abfällen, welche meist während laufender Produktionsprozesse oder während dem Anfahren von Produktionsanlagen als Angüsse, Ausschüsse oder Abschnitte anfallen, hergestellt werden. Diese Pre-Consumer-Rezyklate fallen meist in größeren Mengen und sortenrein an, und können somit ohne größeren Sortier- oder Reinigungsaufwand zerkleinert und anschließend wiederverwendet werden.

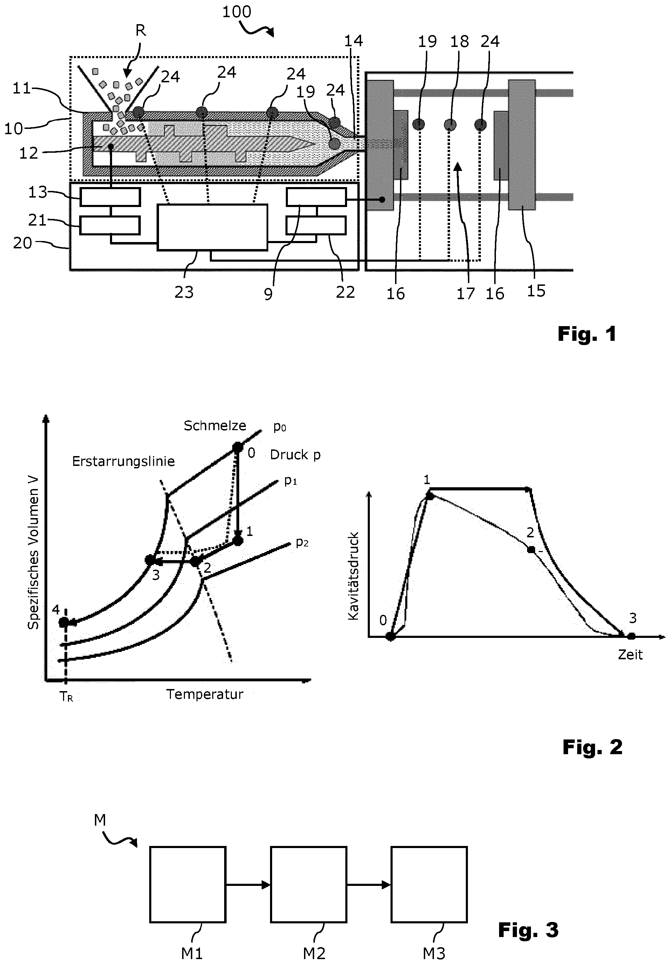

Fig. 1 illustriert schematisch eine Spritzgießmaschine 100 gemäß einer Ausführungsform der vorliegenden Erfindung. Die Spritzgießmaschine 100 dient zur Herstellung direkt verwendbarer Kunststoffbauteile, die aus einem Kunststoffrohmaterial R, wie beispielsweise Granulat, hergestellt werden. Insbesondere kann das Kunststoffrohmaterial R einen bestimmten Anteil an Rezyklatmaterial wie etwa Post-Consumer-Rezyklatmaterial oder Pre-Consumer-Rezyklatmaterial aufweisen, beispielsweise mindestens 1 vol%, mindestens 10 vol%, mindestens 15 vol%, mindestens 20 vol% oder mindestens 25 vol%.

Die Spritzgießmaschine 100 weist als wesentliche übergeordnete Funktionsbauteile eine Plastifiziereinheit 10 mit einem Plastifizierzylinder 11 sowie eine Schließeinheit 15 auf. In der Schließeinheit 15 kann ein Spritzgießwerkzeug 16 eingebracht werden, die mit dem Plastifizierzylinder 11 der Plastifiziereinheit 10 über eine Ausgangsdüse 14 des Plastifizierzylinders 11 verbunden ist. Die Funktionsbauteile der Spritzgießmaschine 100 werden über entsprechende Steuerungsmodule in einem Maschinensteuerungsmodul 20 der Spritzgießmaschine 100 angesteuert.

Die Spritzgießmaschine 100 der Fig. 1 ist beispielhaft als Schneckenspritzgießmaschine dargestellt. Daher weist die Spritzgießmaschine 100 in dem Plastifizierzylinder 11 montierte rotierende Schneckenwelle 12 auf. Die Schneckenwelle 12 wird durch einen Schneckenantrieb 13 als Materialförderantrieb angetrieben, welcher wiederum über eine Schneckenantriebssteuerung 21 angesteuert wird. Die Schneckenantriebssteuerung 21 kann Betriebsparameter des Schneckenantriebs 13 festlegen bzw. anpassen, wie etwa ein Schneckenwellenmoment, eine Schneckenwellendrehzahl, eine Einspritzgeschwindigkeit der Schneckenwelle, den Zeitverlauf eines Einspritzvolumens und/oder einen Einspritznachdruck. Die Schneckenwelle 12 fördert dabei Kunststoffrohmaterial R durch den Plastifizierzylinder 11 und durch die Ausgangsdüse 14 in eine Kavität 17, die durch Matrizen (bzw. gegebenenfalls Kerne und/oder Patrizen) des Spritzgießwerkzeugs 16 gebildet wird.

Alternativ dazu kann die Spritzgießmaschine 100 auch eine Kolbenspritzgießmaschine sein, welche statt der Schneckenwelle 12 einen in dem Plastifizierzylinder 11 gleitend verschiebbaren, durch einen Kolbenantrieb 13 angetriebenen Kolben 12 aufweisen. Die Antriebssteuerung kann in diesem Fall eine Kolbenantriebssteuerung 21 sein, die mit dem Kolbenantrieb 13 als Materialförderantrieb gekoppelt und dazu ausgelegt ist, Betriebsparameter des Kolbenantriebs 13 zu steuern, wie etwa eine Vortriebsgeschwindigkeit des Kolbens, den Zeitverlauf eines Einspritzvolumens, einen Einspritzdruck und/oder einen Einspritznachdruck.

Die Schließeinheit 15 wird durch einen Schließeinheitsantrieb 9 angetrieben, welcher seinerseits über eine Schließeinheitssteuerung 22 angesteuert wird. Die Schließeinheitssteuerung 22 kann Betriebsparameter des Schließeinheitsantriebs 9 festlegen bzw. anpassen, wie etwa eine Werkzeugschließkraft, einen Nachlaufdruck und/oder eine Werkzeugheizleistung.

Grundlegende Betriebsparameter der Spritzgießmaschine 100 wie insbesondere des Schließeinheitsantriebs 9 und des Materialförderantriebs 13 können über Näherungsformeln oder Simulationen bestimmt werden. Rein werkzeugabhängige Parameter wie beispielsweise Umschaltpunkte sowie Nachdruckzeiträume und Nachdruckprofile lassen sich durch spezifische Versuchsprotokolle bestimmen. Die so bestimmten Grundeinstellungen für die Betriebsparameter definieren das grobe Prozessfenster, berücksichtigen jedoch bislang keinerlei Variationen des jeweiligen individuellen Prozesses selbst, insbesondere keine Abweichungen, die in der spezifischen Beschaffenheit und Historie des verwendeten Kunststoffrohmaterials R begründet sind. Dies trifft umso mehr für Kunststoffrohmaterialien R mit einem nicht zu vernachlässigenden Rezyklatanteil zu.

Maschinen- und Prozesszustände können dahingehend angepasst werden, dass Maschinensignale mit theoretischen Materialeigenschaften korreliert werden. Hierzu wird beispielsweise das Moment des Materialförderantriebs 13 dazu verwendet, die Materialviskosität des teilweise oder vollständig plastifizierten Kunststoffrohmaterials R abzuschätzen oder unter Verwendung der über den Materialförderantrieb 13 eingebrachten Plastifizierleistung und der Einspritzgeschwindigkeit die mittlere Massetemperatur des Kunststoffrohmaterials R zu bestimmen. All diese Ansätze setzen homogene Bedingungen voraus und vernachlässigen relevante Realprozesse, sodass das Resultat lediglich eine grobe Abschätzung darstellt.

Fig. 2 skizziert schematisch ein beispielhaftes pVT-Diagramm teilkristalliner Thermoplasten, das als Grundlage für eine Regelung eines Spritzgussprozesses eingesetzt werden kann, sowie einen zeitlichen Verlauf des Betriebsdrucks in der Kavität eines Spritzgießwerkzeugs in einer Schließeinheit einer Spritzgießmaschine, wie beispielsweise der im Zusammenhang mit Fig. 1 erläuterten Spritzgießmaschine 100.

In einem ersten Prozessschritt 0- > 1 wird eine Schmelze eines Thermoplasten innerhalb einer Kavität 17 eines Spritzgießwerkzeugs 16 einer Spritzgießmaschine 100 bei gleichbleibender Temperatur komprimiert. Danach erfolgt in einem Prozessschritt 1->2 eine isobare Abkühlung, bis die Schmelze einen Phasenübergang in die Teilkristallinität durchläuft. Der folgende Prozessschritt 2->3 ist dann eine isochore Abkühlung, bis der Umgebungsdruck p₀ erreicht ist. Danach kann das Endprodukt in dem Spritzgießwerkzeug 16 in einem Prozessschritt 3->4 bei Umgebungsdruck weiter abkühlen.

Der theoretische bzw. optimale Ablauf ist im pVT-Diagramm über die durchgezogene Linie veranschaulicht. Allerdings beeinflussen die chemisch-physikalische Materialveränderung sowie deren Zustand zu Beginn des Fertigungsprozesses (historische Materialveränderung aufgrund Materialschwankungen, Umgebungsbedingungen während der Lagerung, Haltezeit bei erhöhtem thermischen Einfluss etc.) das Verhalten der Viskosität, der Kristallisation oder des Erstarrungsgrades des Thermoplasten. Tatsächlich verlaufen die Prozessschritte daher anders, wie beispielhaft durch die gestrichelte Linie angedeutet.

Die chemisch-physikalische Materialveränderung sowie Materialschwankungen im Rohmaterial müssten daher eigentlich für eine Prozessregelung im Hinblick auf eine konstante Bauteilqualität berücksichtigt werden.

Die Spritzgießmaschine 100 umfasst dazu einen oder mehrere dielektrische oder akustische Sensoren 18, welche in der Kavität 17 des Spritzgießwerkzeugs 16 oder in der Nähe der Kavität 17 des Spritzgießwerkzeugs 16 angeordnet sind. Die dielektrischen Sensoren 18 können die dielektrische Polarisierbarkeit oder die Beweglichkeit freier Ladungsträger der Formmasse S in der Kavität 17 des Spritzgießwerkzeugs 16 bestimmen. Die von den ein oder mehreren dielektrischen oder akustischen Sensoren 18 in oder nahe der Kavität 17 des Spritzgießwerkzeugs 16 ermittelten Messwerte geben allgemein physikalische Eigenschaften der in der Kavität 17 befindlichen Formmasse S an, die in der Spritzgießmaschine 100 verarbeitet wird. Solche physikalischen Eigenschaften können neben der dielektrischen Polarisierbarkeit beispielsweise auch die Dielektrizitätskonstante, die Permittivität, die Impedanz, den Phasenwinkel, die dielektrische Polarisierbarkeit, der dielektrische Verlustfaktor, die lonenleitfähigkeit, viskoelastische Eigenschaften, dynamische Koeffizienten, Glasübergangstemperaturen, Kristallisationstemperaturen, Sublimierungstemperaturen oder lonenviskosität umfassen. Diese physikalischen Parameter können mittels Messung von Dipolpolarisierungs- und lonenmigrationsmustern bestimmt werden. Die dielektrischen Sensoren können zum Beispiel verschränkte Elektrodensensoren, Monotrodensensoren oder Plattenelektrodenkapazitätssensoren aufweisen. Die akustischen Sensoren können beispielsweise Ultraschallsensoren zur Bestimmung der Schallgeschwindigkeit, der Dämpfung, der Dichte oder Temperatur der Formmasse sowie des Forminnendrucks aufweisen.

Es ist auch möglich, weiterhin oder stattdessen andere Sensortypen einzusetzen, wie etwa weitere Ultraschallsensoren, Drucksensoren 19, Temperatursensoren 24, dynamisch-mechanische Sensoren, Spannungsmessgeräte, differentiellthermische Sensoren oder dergleichen. Es ist nur ein dielektrischer Sensor 18 bzw. jeweils nur ein Drucksensoren 19 und ein Temperatursensor 24 explizit in Fig. 1 dargestellt, aber es versteht sich, dass auch mehrere Sensoren desselben oder eines anderen Typs, einer anderen Empfindlichkeit und Wiederverwendbarkeit implementiert werden können.

Die dielektrischen oder akustischen Sensoren 18 sowie gegebenenfalls weitere Sensoren 19 und/oder 24 sind mit einer Sensorsteuerung 23 des Maschinensteuerungsmoduls 20 gekoppelt. Die Sensorsteuerung 23 erfasst und verarbeitet die Messwerte aller Sensoren 18, 19 und 24, so dass ein zeitabhängiger Kristallisationsgrad und eine zeitabhängige mittlere Temperatur der Formmasse S in der Kavität 17 des Spritzgießwerkzeugs 16 aus der bestimmten dielektrischen Polarisierbarkeit oder der Beweglichkeit freier Ladungsträger ermittelt werden können. Die zeitabhängige mittlere Temperatur kann beispielsweise über den Zustand des Auftrags der dielektrischen Polarisierbarkeit über die gemessene Temperatur bestimmt werden. Zudem liefert die dielektrische Polarisierbarkeit eine vergleichbare Antwort wie eine mechanische Materialantwort unter Verformungsstress. Aus akustischen Materialantworten lassen sich Kristallisationsgrad und mittlere Temperatur ebenfalls ableiten.

In Abhängigkeit des ermittelten Kristallisationsgrades und der ermittelten mittleren Temperatur kann die Sensorsteuerung 23 dann die Materialförderantriebssteuerung 21 zur Anpassung der Betriebsparameter des Materialförderantriebs 12 und/oder die Schließeinheitssteuerung 22 zur Anpassung der Betriebsparameter des Schließeinheitsantriebs 9 ansteuern.

Dadurch können Betriebsparameter der wesentlichen Funktionsbauteile der Spritzgießmaschine 100 in Echtzeit angepasst werden, um trotz vorhandener Schwankungen in Materialverhalten, Umweltbedingungen und Prozesseigenschaften für eine vorhersagbare und konstante Bauteilqualität der Spritzgussendprodukte zu sorgen. Insbesondere kann dies durch die Ermittlung von Materialparametern in situ, d.h. innerhalb der Kavität 17 gewährleistet werden, da Veränderungen im Füllverhalten sowie im Abkühl-/Härtungsverhalten (Einspritzmasse, Kristallisationsgeschwindigkeit, Kristallinitätsgrad, Verfestigung amorpher Thermoplaste, reale Massetemperatur) direkt in oder nahe dem Spritzgießwerkzeug 16 nachverfolgt werden können.

Zusätzlich zu den Sensoren 18, 19, 24 in der Kavität 17 des Spritzgießwerkzeugs 16 oder in der Nähe der Kavität 17 des Spritzgießwerkzeugs 16 kann die Sensorsteuerung 23 auf weitere Messwerte von Drucksensoren 19 bzw.

Temperatursensoren 24 an oder in dem Plastifizierzylinder 11 zurückgegriffen werden. Dadurch können auch Veränderungen des Schmelzezustandes im Plastifizierzylinder 11, d.h. Variationen der Schmelzedichte als Folge von geänderten Temperatur- und/oder Viskositätsverhältnissen mit in die Adaption der Betriebsparameter einbezogen werden. Die Drucksensoren 19 können zum Beispiel als Differentialthermoanalysesensoren ausgebildet werden oder es können separate Differentialthermoanalysesensoren eingesetzt werden.

Fig. 3 illustriert schematisch ein Ablaufdiagramm von Stufen eines Verfahrens M zur dynamischen Steuerung von Maschinenparametern durch sensorgestützte Echtzeit-Inline-Überwachung in einer Spritzgießmaschine. Das Verfahren M kann insbesondere in der Spritzgießmaschine 100 umgesetzt werden, wie in Verbindung mit Fig. 1 illustriert.

In einem ersten Schritt M1 erfolgt ein Bestimmen einer dielektrischen Polarisierbarkeit einer Formmasse S in einer Kavität 17 eines Spritzgießwerkzeugs 16 einer Spritzgießmaschine 100 durch einen oder mehrere dielektrische oder akustische Sensoren 18. Die dielektrischen oder akustischen Sensoren 18 können in der Kavität 17 des Spritzgießwerkzeugs 16 oder in der Nähe der Kavität 17 des Spritzgießwerkzeugs 16 angeordnet sein.

In einem zweiten Schritt M2 wird ein zeitabhängiger Kristallisationsgrad und eine zeitabhängige mittlere Temperatur der Formmasse S in der Kavität 17 des Spritzgießwerkzeugs 16 aus der durch die dielektrischen Sensoren 18 bestimmten dielektrischen Polarisierbarkeit und der Beweglichkeit freier Ladungsträger ermittelt. Diese bestimmte dielektrische Polarisierbarkeit, Beweglichkeit freier Ladungsträger oder akustische Materialantwort kann in einem dritten Schritt M3 verwendet werden, um in Abhängigkeit davon Betriebsparameter eines Materialförderantriebs 13 einer Materialfördervorrichtung 12 der Spritzgießmaschine 100 und/oder eines Schließeinheitsantrieb 9 einer Schließeinheit 15 der Spritzgießmaschine 100 einzustellen bzw. anzusteuern.

In der obigen ausführlichen Beschreibung sind verschiedene Merkmale in einem oder mehr Beispielen oder Beispielen mit dem Zweck der Verschlankung der Offenbarung gruppiert. Es versteht sich, dass die obige Beschreibung als illustrativ, und nicht als restriktiv, zu verstehen ist. Sie soll alle Alternativen, Modifikationen und Äquivalente abdecken. Viele andere Beispiele werden einem Fachmann bei der Betrachtung der obigen Beschreibung offenkundig sein.

Die Ausführungsformen wurden gewählt und beschrieben, um die Grundsätze der Erfindung und ihre praktischen Anwendungen bestmöglich zu erklären, und damit andere Fachleute in die Lage zu versetzen die Erfindung und verschiedene Ausführungsformen mit verschiedenen Modifikationen, die sich für die speziell betrachtete Verwendung eignet, bestmöglich zu nutzen. In den beiliegenden Ansprüchen und der Beschreibung werden die Begriffe "enthaltend" und "in dem" als einfache sprachliche Gegenstücke für die jeweiligen Begriffe "umfassend" bzw. "worin" verwendet. Weiterhin schließt "ein" oder "eine" in dem vorliegenden Fall nicht mehrere aus.

### Liste der Referenzzeichen

- 9: Schließeinheitsantrieb
- 10: Plastifiziereinheit
- 11: Plastifizierzylinder
- 12: Materialfördervorrichtung
- 13: Materialförderantrieb
- 14: Ausgangsdüse
- 15: Schließeinheit
- 16: Spritzgießwerkzeug
- 17: Kavität
- 18: dielektrische oder akustische Sensoren
- 19: Drucksensoren
- 20: Maschinensteuerungsmodul
- 21: Materialförderantriebssteuerung
- 22: Schließeinheitssteuerung
- 23: Sensorsteuerung
- 24: Temperatursensoren
- 100: Spritzgießmaschine
- S: Formmasse
- R: Rohmaterial
- M: Verfahren
- M1-3: Verfahrensstufen

## Patentansprüche

1. Spritzgießmaschine (100), umfassend:
eine Plastifiziereinheit (10) mit einem Plastifizierzylinder (11) und einer in dem Plastifizierzylinder (11) beweglichen, durch einen Materialförderantrieb (13) angetriebenen Materialfördervorrichtung (12); eine Materialförderantriebssteuerung (21), welche mit dem Materialförderantrieb (12) gekoppelt und dazu ausgelegt ist, Betriebsparameter des Materialförderantriebs (12) zu steuern;
eine Schließeinheit (15) mit einem Spritzgießwerkzeug (16), welches mit einer Ausgangsdüse (14) des Plastifizierzylinders (11) verbunden ist;
eine Schließeinheitssteuerung (22), welche mit einem Schließeinheitsantrieb (9) der Schließeinheit (15) gekoppelt und dazu ausgelegt ist, Betriebsparameter des Schließeinheitsantriebs (9) zu steuern;
einen oder mehrere dielektrische oder akustische Sensoren (18), welche in der Kavität (17) des Spritzgießwerkzeugs (16) oder in der Nähe der Kavität (17) des Spritzgießwerkzeugs (16) angeordnet und dazu ausgelegt sind, die dielektrische Polarisierbarkeit, die Beweglichkeit freier Ladungsträger und/oder akustische Materialantworten einer Formmasse (S) in der Kavität (17) des Spritzgießwerkzeugs (16) zu bestimmen; und
eine Sensorsteuerung (23), welche mit dem/n dielektrischen oder akustischen Sensor/en (18) gekoppelt und dazu ausgelegt ist, einen zeitabhängigen Kristallisationsgrad und eine zeitabhängige mittlere Temperatur der Formmasse (S) in der Kavität (17) des Spritzgießwerkzeugs (16) aus der durch den/die dielektrischen oder akustischen Sensor/en (18) bestimmten dielektrischen Polarisierbarkeit, der Beweglichkeit freier Ladungsträger und/oder den akustischen Materialantworten zu ermitteln und in Abhängigkeit des ermittelten Kristallisationsgrades und der ermittelten mittleren Temperatur die Materialförderantriebssteuerung (21) und/oder die Schließeinheitssteuerung (22) zur Anpassung der Betriebsparameter des Materialförderantriebs (12) und/oder des Schließeinheitsantriebs (9) anzusteuern.

2. Spritzgießmaschine (100) nach Anspruch 1, wobei der Materialförderantrieb (13) ein Schneckenantrieb und die Materialfördervorrichtung (12) eine Schneckenwelle ist, und wobei die Betriebsparameter des Schneckenantriebs (13) das Schneckenwellenmoment, die Schneckenwellendrehzahl die Einspritzgeschwindigkeit, das Einspritzvolumen, den Umschaltpunkt und/oder den Einspritznachdruck umfassen.

3. Spritzgießmaschine (100) nach Anspruch 1 oder 2, wobei die Betriebsparameter des Schließeinheitsantriebs (15) die Werkzeugschließkraft, den Forminnendruck und/oder die Werkzeugheizleistung umfassen.

4. Spritzgießmaschine (100) nach einem der vorhergehenden Ansprüche, wobei die Formmasse (S) in der Kavität (17) des Spritzgießwerkzeugs (16) einen Anteil von mindestens 1 vol%, insbesondere mindestens 10 vol%, insbesondere mindestens 15 vol%, insbesondere mindestens 20 vol%, und insbesondere mindestens 25 vol% Rezyklatmaterial, insbesondere Pre-Consumer-Rezyklatmaterial oder Post-Consumer-Rezyklatmaterial, aufweist.

5. Spritzgießmaschine (100) nach einem der vorhergehenden Ansprüche, weiterhin umfassend:
einen oder mehrere Temperatursensoren (24), welche in der Kavität (17) des Spritzgießwerkzeugs (16), in der Nähe der Kavität (17) des Spritzgießwerkzeugs (16) und/oder an dem Plastifizierzylinder (11) angeordnet sind.

6. Spritzgießmaschine (100) nach einem der vorhergehenden Ansprüche, weiterhin umfassend:
einen oder mehrere Drucksensoren (19), welche in der Kavität (17) des Spritzgießwerkzeugs (16), in der Nähe der Kavität (17) des Spritzgießwerkzeugs (16) und/oder an dem Plastifizierzylinder (11) angeordnet sind.

7. Spritzgießmaschine (100) nach Anspruch 6, wobei der eine oder die mehreren Drucksensoren (19) Differentialthermoanalysesensoren umfassen.

8. Verfahren (M) zur dynamischen Steuerung von Maschinenparametern durch sensorgestützte Echtzeit-Inline-Überwachung in einer Spritzgießmaschine (100) mit einer Materialfördervorrichtung (12) und einer Schließeinheit (15), welches die folgenden Schritte umfasst:
Bestimmen (M1) einer dielektrischen Polarisierbarkeit, einer Beweglichkeit freier Ladungsträger und/oder akustischer Materialantworten einer Formmasse (S) in einer Kavität (17) eines Spritzgießwerkzeugs (16) einer Spritzgießmaschine (100) durch einen oder mehrere dielektrische oder akustische Sensoren (18), welche in der Kavität (17) des Spritzgießwerkzeugs (16) oder in der Nähe der Kavität (17) des Spritzgießwerkzeugs (16) angeordnet sind;
Ermitteln (M2) eines zeitabhängigen Kristallisationsgrades und einer zeitabhängigen mittleren Temperatur der Formmasse (S) in der Kavität (17) des Spritzgießwerkzeugs (16) aus der durch den/die dielektrischen oder akustischen Sensor/en (18) bestimmten dielektrischen Polarisierbarkeit, Beweglichkeit freier Ladungsträger und/oder akustischer Materialantworten; und
Anpassen (M3) von Betriebsparametern eines Materialförderantriebs (13) der Materialfördervorrichtung (12) und/oder eines Schließeinheitsantriebs (9) der Schließeinheit (15) in Abhängigkeit des ermittelten Kristallisationsgrades und der ermittelten mittleren Temperatur.

9. Verfahren (M) nach Anspruch 8, wobei der Materialförderantrieb (13) ein Schneckenantrieb und die Materialfördervorrichtung (12) eine Schneckenwelle ist, und wobei die Betriebsparameter des Schneckenantriebs (12) das Schneckenwellenmoment, die Schneckenwellendrehzahl, die Einspritzgeschwindigkeit, das Einspritzvolumen, den Umschaltpunkt und/oder den Einspritznachdruck umfassen.

10. Verfahren (M) nach Anspruch 8 oder 9, wobei die Betriebsparameter des Schließeinheitsantriebs (15) die Werkzeugschließkraft, den Forminnendruck und/oder die Werkzeugheizleistung umfassen.

11. Verfahren (M) nach einem der Ansprüche 8 bis 10, wobei die Formmasse (S) in der Kavität (17) des Spritzgießwerkzeugs (16) einen Anteil von mindestens 1 vol%, insbesondere mindestens 10 vol%, insbesondere mindestens 15 vol%, insbesondere mindestens 20 vol%., und insbesondere mindestens 25 vol% Rezyklatmaterial, insbesondere Pre-Consumer-Rezyklatmaterial oder Post-Consumer-Rezyklatmaterial, aufweist.

12. Verfahren (M) nach einem der Ansprüche 8 bis 10, weiterhin mit dem Schritt des Ermittelns einer Temperatur der Formmasse (S) in einem Plastifizierzylinder (11) der Spritzgießmaschine (100) und/oder in der Kavität (17) des Spritzgießwerkzeugs (16) durch einen oder mehrere Temperatursensoren (24), welche in der Kavität (17) des Spritzgießwerkzeugs (16), in der Nähe der Kavität (17) des Spritzgießwerkzeugs (16) und/oder an dem Plastifizierzylinder (11) angeordnet sind.

13. Verfahren (M) nach einem der Ansprüche 8 bis 10, weiterhin mit dem Schritt des Ermittelns eines Drucks der Formmasse (S) in einem Plastifizierzylinder (11) der Spritzgießmaschine (100) und/oder in der Kavität (17) des Spritzgießwerkzeugs (16) durch einen oder mehrere Drucksensoren (19), welche in der Kavität (17) des Spritzgießwerkzeugs (16), in der Nähe der Kavität (17) des Spritzgießwerkzeugs (16) und/oder an dem Plastifizierzylinder (11) angeordnet sind.

14. Verfahren (M) nach Anspruch 13, wobei der eine oder die mehreren Drucksensoren (19) Differentialthermoanalysesensoren umfassen.
